# EUROPÄISCHE PATENTSCHRIFT

(11) **EP 4 353 537 B1**
(45) Veröffentlichungstag und Bekanntmachung des Hinweises auf die Patenterteilung: **18.06.2025**
(21) Anmeldenummer: 24160222.6
(22) Anmeldetag: 06.07.2018
(51) Int. Cl.: B60Q 1/50, B60Q 1/32, B60Q 1/52

(54) **NUTZFAHRZEUG MIT GESTEUERTER MUSTERPROJEKTION**
COMMERCIAL VEHICLE WITH CONTROLLED PATTERN PROJECTION
VÉHICULE UTILITAIRE AVEC PROJECTION DE MOTIF COMMANDÉE

(30) Priorität: 27.07.2017 DE 102017117044
(43) Veröffentlichungstag der Anmeldung: 17.04.2024
(62) Teilanmeldung aus: 18182131.5
(73) Patentinhaber: MAN Truck & Bus SE, 80995 München (DE)
(72) Erfinder: Friedrich, Dieter, 8020 Graz (AT); Gössler, Thomas, 8010 Graz (AT); Meixner, Luis, 8010 Graz (AT); Ernhardt, Jan, 8010 Graz (AT); Gaedtke, Sven, 80995 München (DE); Landsherr, Thomas, 80995 München (DE); Elbs, Norbert, verstorben (DE); Schönherr, Stephan, 80995 München (DE)
(74) Vertreter: v. Bezold & Partner Patentanwälte - PartG mbB

(56) Entgegenhaltungen:
- EP-A2- 2 985 182
- DE-A1- 102009 009 473
- DE-A1- 102013 012 891
- DE-U1- 202016 004 062
- US-A1- 2011 128 141
- US-A1- 2014 172 239
- US-A1- 2017 096 095

## Beschreibung

Die vorliegende Erfindung betrifft ein Nutzfahrzeug, das zur Projektion eines steuerbaren Musters ausgebildet ist.

Herkömmliche optische Sicherheitssysteme für öffentliche Verkehrsmittel sind aus dem Dokument DE 20 2016 004 062 U1 bekannt. Solche Sicherheitssysteme umfassen mehrere am Fahrzeug angebrachte Laserstrahler, die einen Lichtstrahl auf den Boden in der Umgebung des Fahrzeugs abgeben, um einen Einstiegs- und Ausstiegsbereich sichtbar für andere Verkehrsteilnehmer zu markieren. Insbesondere wird eine Linie seitlich vor und eine Linie seitlich nach einem Linienbus auf den Bürgersteig oder Radweg projiziert, um den Einstiegs- und Ausstiegsbereich zu markieren. Indem die projizierten Linien von der Fahrgasttüre ausreichend beabstandet sind, können die Fahrgäste beim Ein- oder Aussteigen vor unvorsichtigen Radfahrern geschützt werden. Ein ähnliches System ist weiterhin aus der US 2017/0096095 A1 bekannt.

Nachteilig an den bekannten Sicherheitssystemen ist, dass sie nur im Stillstand eines Fahrzeugs einsetzbar sind. Ferner sind die herkömmlicherweise projizierten Linien vom Gefahrenbereich beabstandet, so dass eine Zuordnung zum Gefahrenbereich, und bei mehreren Fahrstreifen sogar eine Zuordnung zum Fahrzeug, nicht unmittelbar ersichtlich für herannahende Verkehrsteilnehmer ist.

Aus der US 2014/0172239 A1 ist ferner ein Abbiegeassistenzsystem bekannt, das eine Vielzahl von projizierten Strahlen entlang des Fahrzeugs umfasst. Wenn ein Abbiegevorgang für das Fahrzeug durchgeführt wird, zeigen diese Strahlen den Weg des Fahrzeugs auf der Straße an, wodurch der Fahrzeugweg für diejenigen, die sich in der Nähe des Fahrzeugs befinden, gut sichtbar ist und ihnen hilft, sich außerhalb des Weges des Fahrzeugs aufzuhalten.

Ein ähnliches System ist auch aus der EP 2 985 182 A2 bekannt. Dieses Dokument offenbart ein Verfahren und eine Anordnung zur Warnung von Verkehrsteilnehmern vor möglichen Gefahrenbereichen, die durch ein Fahrzeug entstehen, das ein Fahrmanöver ausführt oder ausführen will. Dazu ist eine Steuereinrichtung vorgesehen, die auf Basis des Lenkwinkel und der Fahrtrichtung des Fahrzeugs zyklisch einen Verkehrsraum ermittelt, der bei Beibehaltung des Lenkeinschlags innerhalb einer vorgebbaren Zeit und Geschwindigkeit zukünftig belegt wird. Mittels der so gewonnenen Informationen über den zukünftig belegten Verkehrsraum wird dann wenigstens eine Projektionseinrichtung in dergestalt angesteuert, dass wenigstens ein Teil des zukünftig belegten Verkehrsraums durch eine Lichtprojektion auf die das Fahrzeug umgebende Bodenfläche sichtbar gemacht wird.

Die Offenlegungsschrift DE 10 2013 012 891 A1 offenbart weiterhin ein Verfahren zum Projizieren eines graphisch darstellbaren Anzeigeinhaltes durch eine Projektionsvorrichtung eines Kraftfahrzeugs, wobei der Anzeigeinhalt verschiedenartige Informationen oder andere Inhalte wiedergeben kann. Dazu umfasst das Verfahren ein Empfangen eines Steuersignals durch eine Steuereinrichtung des Kraftfahrzeugs, wobei das Steuersignal den Anzeigeinhalt und eine Projektionsfläche in der Umgebung des Kraftfahrzeugs vorgibt. In Abhängigkeit dieses Steuersignals erfolgt dann ein Ermitteln des Anzeigeinhalts durch die Steuereinrichtung. Anschließend wird die mindestens einer Projektionsvorrichtung des Kraftfahrzeugs auf die vorgegebene Projektionsfläche ausgerichtet und der ermittelte Anzeigeinhalt von der Steuereinrichtung an die mindestens eine Projektionsvorrichtung übertragen. Letztlich erfolgt ein Projizieren des Anzeigeinhaltes durch die mindestens eine Projektionsvorrichtung auf die vorgegebene Projektionsfläche wobei das Erzeugen des Steuersignals von einem Sensor des Kraftfahrzeugs erfolgt, der ein beabsichtigtes Öffnen einer Kraftfahrzeugtür oder einer Lade- oder Heccklappe durch den Benutzer erkennt und wobei der Anzeigeinhalt einen Warnhinweis umfasst.

Aus der DE 10 2009 009 473 A1 ist ein Fahrerassistenzsystem für ein Fahrzeug und andere Verkehrsteilnehmer bekannt mit einer Umfelderfassungsvorrichtung zum Detektieren von anderen Verkehrsteilnehmern im Umfeld des Fahrzeugs, einer mit der Umfelderfassungsvorrichtung gekoppelten Analysevorrichtung, mittels welcher bestimmbar ist, ob eine Kollisionsgefahr für das Fahrzeug mit einem anderen Verkehrsteilnehmer besteht, und einer mit der Analysevorrichtung gekoppelten Steuervorrichtung zur Steuerung eines Scheinwerfersystems des Fahrzeugs. Mittels der Steuervorrichtung ist dabei das Scheinwerfersystem so ansteuerbar, dass ein Lichtzeichen auf die Fahrbahn projizierbar ist, das den anderen Verkehrsteilnehmer auf die Kollisionsgefahr aufmerksam macht.

Eine Aufgabe der vorliegenden Erfindung besteht darin, eine Technik anzugeben, welche vorgreifend die von einem Nutzfahrzeug ausgehenden Gefahren mindert, insbesondere anderen Verkehrsteilnehmern Kollisionsgefahren unmittelbar und vorausschauend erkennbar macht.

Eine weitere oder alternative Aufgabe besteht darin, Benutzern des Nutzfahrzeugs, beispielsweise Fahrgästen, Handlungsoptionen in eindeutiger räumlicher Zuordnung zum Nutzfahrzeug auszugeben.

Diese Aufgabe oder Aufgaben werden durch ein Nutzfahrzeug mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem Aspekt ist ein Nutzfahrzeug bereitgestellt. Das Nutzfahrzeug umfasst eine an mindestens einer Fahrzeugseite des Nutzfahrzeugs angeordnete Lichtquelle, die dazu ausgebildet ist, ein steuerbares Muster auf eine an die jeweilige Fahrzeugseite angrenzende Bodenfläche neben dem Fahrzeug zu projizieren. Ferner umfasst das Nutzfahrzeug eine mit der Lichtquelle in Signalverbindung stehende Steuerungseinheit, die dazu ausgebildet ist, einen Betriebszustand des Nutzfahrzeugs zu erfassen und die Lichtquelle zur Signalisierung des erfassten Betriebszustands mittels des projizierten Musters zu steuern.

Die Bodenfläche, d.h. die Bodenfläche auf die das Muster projiziert ist, kann eine Fahrbahn oder einen Fahrstreifen umfassen. Insbesondere kann die Bodenfläche einen Teil des vom Nutzfahrzeug momentan befahrenen Fahrstreifens und/oder einen Teil des zu dem vom Nutzfahrzeug momentan befahrenen Fahrstreifen benachbarten Fahrstreifens umfassen. Alternativ oder ergänzend kann die Bodenfläche einen Teil eines Parkplatzes und/oder eines Rangierplatzes umfassen.

Die Lichtquelle kann an der Fahrzeugseite des Nutzfahrzeugs (beispielsweise über die Fahrzeugseite des Nutzfahrzeugs) verteilt angeordnet sein. Beispielsweise kann sich eine homogene Lichtquelle horizontal an der Fahrzeugseite erstrecken. Alternativ kann die Lichtquelle eine Vielzahl von gleichmäßig verteilten Teillichtquellen umfassen. Die Lichtquelle kann entlang eines Großteils der Fahrzeugseite sich erstrecken oder verteilt sein. Hierbei kann der Großteil mehr als die Hälfte der Fahrzeugseite umfassen.

Die Lichtquelle kann nach oben von einer Außenverkleidung verdeckt sein. Die Lichtquelle kann in einer zur Projektion nach unten und/oder zur Seite offenen Ausnehmung an der Fahrzeugseite angeordnet sein.

Das projizierte Muster kann sich über die Fahrzeuglänge des Nutzfahrzeugs hinaus erstrecken. Beispielsweise kann sich das projizierte Muster über die Fahrzeugfront und/oder das Fahrzeugheck hinaus erstrecken. Die Steuerbarkeit des Musters kann dessen Ausdehnung (beispielsweise in Längs und/oder Querrichtung) umfassen.

Das projizierte Muster kann nach Maßgabe eines Steuersignals der Steuerungseinheit veränderlich sein. Das projizierte Muster kann hinsichtlich Form und/oder Farbe steuerbar sein.

Erfindungsgemäß ist die Steuerungseinheit dazu ausgebildet , einen Verkehrsteilnehmer auf der Bodenfläche der Projektion zu erfassen. Wenn die Steuerungseinheit einen Verkehrsteilnehmer auf der Bodenfläche der Projektion erfasst, steuert diese eine Veränderung der Farbe des projizierten Musters . Zur Erfassung des Verkehrsteilnehmers kann das Nutzfahrzeug beispielsweise einen LIDAR-Sensor (zur optischen, richtungsaufgelösten Abstandsmessung, engl. "light detection and ranging", kurz LIDAR), einen Radarsensor und/oder eine Stereokamera mit einer Vorrichtung zur Bilderkennung umfassen, die mit der Steuerungseinheit in Signalverbindung stehen.

Die Steuerungseinheit kann dazu ausgebildet sein, ein Fahrmanöver zu erfassen. Das projizierte Muster kann abhängig vom erfassten Fahrmanöver gesteuert sein. Das Fahrmanöver kann einen Spurwechsel, einen Rangiervorgang, einen Parkvorgang und/oder einen Abbiegevorgang umfassen.

Die gesteuerte Farbe des Musters kann von einer Klassifizierung des erfassten Fahrmanövers, einer vorausberechneten Dauer des Fahrmanövers und/oder einer durchschnittlichen oder maximalen Fahrgeschwindigkeit des Fahrmanövers abhängen.

Die Steuerungseinheit kann dazu ausgebildet sein, eine beim erfassten Fahrmanöver zukünftig befahrene Bodenfläche vorauszuberechnen. Das Muster kann zumindest teilweise auf die vorausberechnete Bodenfläche projiziert werden. Das projizierte Muster kann die gemäß der Vorausberechnung befahrene Bodenfläche angeben, beispielsweise eine Randlinie der befahrenen Bodenfläche umfassen. Das Muster kann projiziert werden auf einen Teil der vorausberechneten Bodenfläche, der seitlich an das Nutzfahrzeug angrenzt. Alternativ oder in Kombination kann das Muster projiziert werden auf einen Teil der vorausberechneten Bodenfläche, welcher der Lichtquelle projektiv zugänglich ist.

In der Vorausberechnung kann die Bodenfläche als befahren gelten, falls diese aufgrund des Fahrmanövers mit mindestens einem Rad befahren und/oder vom Nutzfahrzeug überstrichen wird. Die zu einem ersten Zeitpunkt mit dem Muster projizierte Bodenfläche kann gemäß dem Fahrmanöver zu einem späteren zweiten Zeitpunkt vom Nutzfahrzeug mit mindestens einem Rad befahren und/oder vom Nutzfahrzeug überstrichen werden. Beispielsweise kann die vom projizierten Muster beleuchtete Bodenfläche nachfolgend beim Abbiegevorgang befahren werden. Das projizierte Muster kann ohne eine Richtungsangabe (wie etwa einen Pfeil oder einen Winkel) sein. Beispielsweise kann sich das projizierte Muster nicht in einer Richtungsangabe der Bewegungsrichtung des Nutzfahrzeugs beim Fahrmanöver erschöpfen.

Das projizierte Muster kann eine räumliche Ausdehnung der beim Fahrmanöver befahrenen Bodenfläche angeben. Das projizierte Muster kann eine Sperrfläche sein. Das projizierte Muster der Sperrfläche kann gerade und/oder zueinander parallele Streifen umfassen. Die Streifen können unter einem Winkel von 30° bis 60° zur Längsrichtung des Nutzfahrzeugs stehen.

Die Steuerungseinheit kann ferner dazu ausgebildet sein, eine Fahrbewegung des Nutzfahrzeugs zu erfassen und das projizierte Muster entsprechend der erfassten Fahrbewegung zu verändern. Eine Projektionsrichtung kann die erfasste Fahrbewegung des Nutzfahrzeugs (beispielsweise vollständig oder teilweise) kompensieren. Das gesamte projizierte Muster kann bezüglich der Bodenfläche ruhen.

Die Lichtquelle kann in räumlicher Zuordnung zu mindestens einer Fahrgasttüre angeordnet sein. Die Steuerungseinheit kann dazu ausgebildet sein, während einer ersten Zeitphase zum Einsteigen das Muster mit einer ersten Farbe auszugeben und während einer zweiten Zeitphase zum Aussteigen das Muster mit einer von der ersten Farbe verschiedenen zweiten Farbe auszugeben. Die erste Farbe kann Grün und die zweite Farbe kann Rot umfassen.

Die Steuerungseinheit kann dazu ausgebildet sein, den Stand des Nutzfahrzeugs an einer Haltestelle zu erfassen, beispielsweise aufgrund von Fahrbewegungen und/oder satellitenbasierter Positionierung. Die erste Zeitphase und die zweite Zeitphase können disjunkt sein. An der Haltestelle können eine Phase des Anhaltens, die erste Zeitphase, die zweite Zeitphase und eine Phase des Abfahrens direkt aufeinanderfolgen. Im Stand an der Haltestelle kann entweder die erste Farbe oder die zweite Farbe projiziert werden.

In der ersten Zeitphase kann die Fahrgasttür entsperrt, öffnend oder geöffnet sein. Die entsperrte Fahrzeugtüre kann in einem durch Betätigung (beispielsweise eines Berührungssensors) von außerhalb des Nutzfahrzeugs öffenbaren Zustand sein. In der zweiten Zeitphase kann die Fahrertüre schließend, geschlossen oder abgesperrt sein. Bei abgesperrter Fahrzeugtüre und/oder im zweiten Zustand kann die Betätigung (beispielsweise des Berührungssensors) von außerhalb des Nutzfahrzeugs wirkungslos sein.

Das projizierte Muster kann eine zum Einsteigen und/oder Aussteigen zu betretende Zugangsfläche vor der Fahrgasttüre angeben. Eine schematische Darstellung der Türe durch das projizierte Muster kann unterbleiben.

Die Zugangsfläche kann eine Fahrbahn oder einen Fahrstreifen (beispielsweise einen Radweg) schneiden oder queren (d.h., sich quer über den Fahrstreifen erstrecken). Die Steuerungseinheit kann ferner dazu ausgebildet sein, Verkehrsteilnehmer auf der Fahrbahn oder dem Fahrstreifen zu erfassen, beispielsweise mittels der LIDAR-Sensoren, der Radarsensoren und/oder durch die Bilderkennung eines Signals der Stereokamera. Die Steuerungseinheit kann ferner dazu ausgebildet sein, bei Annäherung eines erfassten Verkehrsteilnehmers ein vor dem sich annähernden Verkehrsteilnehmer warnendes Muster zu projizieren. Das Muster, insbesondere das warnende Muster, kann ein zeitliches Blinkmuster umfassen.

Das Nutzfahrzeug kann insbesondere ein Bus, ein Lastkraftwagen, eine Sattelzugmaschine oder ein Baustellenfahrzeug sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische perspektivische Darstellung eines ersten Ausführungsbeispiels eines Nutzfahrzeugs;
- Figur 2: eine schematische perspektivische Darstellung eines zweiten Ausführungsbeispiels des Nutzfahrzeugs;
- Figur 3: eine schematische Schnittdarstellung zur Implementierung einer Lichtquelle, die in jedem Ausführungsbeispiel einsetzbar ist; und
- Figur 4: eine perspektivische Unteransicht der Lichtquelle gemäß Figur 3.

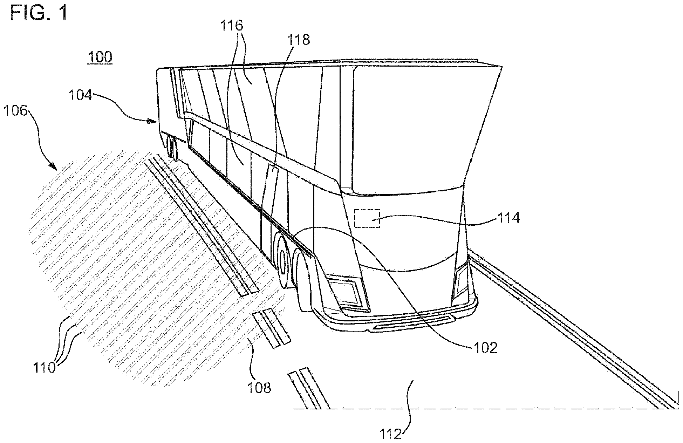

Figur 1 zeigt schematisch eine perspektivische Darstellung eines beispielhaften und allgemein mit Bezugszeichen 100 bezeichneten Nutzfahrzeugs. Das Nutzfahrzeug 100 umfasst mindestens eine Lichtquelle 102, die an mindestens einer Fahrzeugseite 104 des Nutzfahrzeugs 100 angeordnet ist. Die Lichtquelle 102 ist dazu ausgebildet, ein steuerbares Muster 106 auf eine an die jeweilige Fahrzeugseite 104 angrenzende Bodenfläche 108 neben dem Nutzfahrzeug 100 zu projizieren. Die Lichtquelle 102 ist über einen Großteil der Längsrichtung der Fahrzeugseite verteilt angeordnet. Das steuerbare Muster 106 kann mehrere, diagonal zur Längsrichtung des Nutzfahrzeugs 100 verlaufende Streifen 110 umfassen.

Die Bodenfläche 108 der Projektion grenzt unmittelbar an das Nutzfahrzeug 100 an der betreffenden Fahrzeugseite 104 an. Im in Figur 1 gezeigten ersten Ausführungsbeispiel umfasst die Bodenfläche 108 der Projektion eine Abstandsfläche zwischen Nutzfahrzeug 100 und Begrenzungslinie des vom Nutzfahrzeug 100 gegenwärtig befahrenen Fahrstreifens 112 und den auf der betreffenden Fahrzeugseite 104 zum Fahrstreifen 112 benachbarten Fahrstreifen.

Das Nutzfahrzeug 100 umfasst ferner eine mit der Lichtquelle 102 in Signalverbindung stehende Steuerungseinheit 114. Die Steuerungseinheit 114 ist dazu ausgebildet, einen Betriebszustand des Nutzfahrzeugs 100 zu erfassen und die Lichtquelle 102 zur Signalisierung des erfassten Betriebszustands zu steuern.

Im in Figur 1 gezeigten ersten Ausführungsbeispiel umfasst der signalisierte Betriebszustand einen Spurwechselvorgang als Beispiel eines erfassten Fahrmanövers. Die Steuerungseinheit 114 erfasst bei manuellem Fahren den beabsichtigten Spurwechsel, beispielsweise anhand eines Lenkwinkels und/oder eines gesetzten Fahrtrichtungsanzeigers. Bei autonomem Fahren erfasst die Steuerungseinheit 114 einen geplanten Spurwechsel durch Signalaustausch mit einem das autonome Fahren ausführenden Bordcomputer. In jedem Fall kann die Steuerungseinheit 114 funktioneller Bestandteil des Bordcomputers sein.

Bevor oder sobald das Nutzfahrzeug 100 den Spurwechsel vollzieht wird der Gefahrenbereich auf die entsprechende Bodenfläche 108 projiziert. Andere Verkehrsteilnehmer werden so frühzeitig gewarnt. Optional färbt die Steuerungseinheit 114 das Muster 106 der Projektion rot (beispielsweise ausgehende von einem gelben Muster 106), wenn ein anderer Verkehrsteilnehmern im Gefahrenbereich von der Steuerungseinheit 114 erfasst wird.

Aufgrund des erfassten Spurwechselvorgangs berechnet die Steuerungseinheit 114 eine beim Spurwechselvorgang zukünftig vom Nutzfahrzeug mit mindestens einem Rad befahrene Fläche und projiziert auf diese vorausberechnete Bodenfläche 108 das Muster 106. Aufgrund der zur Längsrichtung des Nutzfahrzeugs 100 diagonal auf der Bodenfläche 108 verlaufenden Streifen 110, d.h. den streifenförmigen beleuchteten Orten auf der Bodenfläche 108, entspricht das Muster 106 dem einer Sperrfläche.

Die Steuerungseinheit 114 erfasst ferner die momentane Fahrgeschwindigkeit des Nutzfahrzeugs 100 und steuert das projizierte Muster 106 so, dass die einzelnen Streifen 110 bezüglich der Bodenfläche 108 ruhen. Durch den deutlichen Geschwindigkeitsunterschied zwischen dem Nutzfahrzeug 100 und anderen Verkehrsteilnehmern einerseits, und den ruhenden Streifen 110 andererseits, ist für alle Verkehrsteilnehmer die beabsichtigte Belegung dieser Bodenfläche 108 beim Spurwechselvorgang durch einen klaren Ortsbezug erkennbar. Zudem ist, da die Bodenfläche 108, auf die das Muster 106 projiziert wird, an das Nutzfahrzeug 100 angrenzt, die Zuordnung zum Nutzfahrzeug 100 als dem Verkehrsteilnehmer, der die angezeigte Sperrfläche zu befahren beabsichtigt, eindeutig angezeigt.

Im in Figur 1 gezeigten ersten Ausführungsbeispiel ist die Lichtquelle auf einer einheitlichen Höhe unterhalb einer im gezeigten Beispiel zweistöckigen Fensterfront 116 angeordnet. Die sich horizontal über die Fahrzeugseite 104 erstreckende Lichtquelle 102 wird an mindestens einer Fahrzeugtür 118 unterteilt in einen außenseitig an der Fahrzeugtür 118 angeordneten Längsstreifen und an der Außenhaut der Fahrzeugseite 104 befestigte Längsstreifen der Lichtquelle 102.

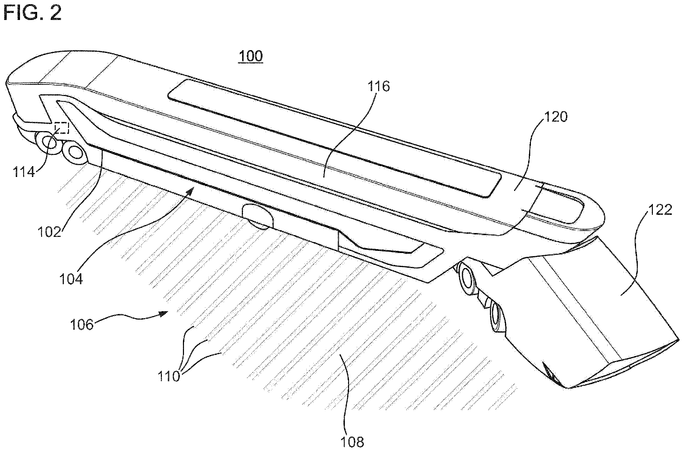

Figur 2 zeigt schematisch eine perspektivische Darstellung eines zweiten Ausführungsbeispiels des Nutzfahrzeugs 100. Das im zweiten Ausführungsbeispiel gezeigte Nutzfahrzeug ist ein Bus mit einer am Heck des Nutzfahrzeugs 100 über ein Gelenksystem mit der Fahrgastzelle 120 schwenkbeweglich verbundenen Antriebseinheit 122. Jene Merkmale des zweiten Ausführungsbeispiels, die mit Merkmalen des ersten Ausführungsbeispiels übereinstimmen oder austauschbar sind, sind mit jeweils übereinstimmenden Bezugszeichen versehen.

Die Lichtquelle 102 erstreckt sich auf der in Figur 2 dargestellten Fahrzeugseite 104 auf einer einheitlichen Höhe über einen Großteil der Längsrichtung des Fahrgastraums 120. Die Höhe der Lichtquelle 102 kann beispielsweise tangential zu Radkästen auf der betreffenden Fahrzeugseite 104 sein.

Im in Figur 2 gezeigten zweiten Ausführungsbeispiel erfasst die Steuerungseinheit 114 einen Abbiegevorgang oder einen Rangiervorgang als Beispiele eines erfassten Fahrmanövers. Im Fall des erfassten Rangiervorgangs zieht die Antriebseinheit 122 das Nutzfahrzeug 100 nach vorne rechts, so dass die in Figur 2 gezeigte rechte Fahrzeugseite 104 die vom Muster 106 bedeckte Bodenfläche 108 überstreicht. Vorzugsweise umfasst die durch das Muster 106 angezeigte Bodenfläche 108 zusätzlich zur von der betreffenden Fahrzeugseite 104 überstrichenen Fläche einen Sicherheitsabstand zur Fahrzeugseite 104 während des gesamten, vorausberechneten Fahrmanövers.

Die Vorausberechnung kann beispielsweise bis zu einem Abschlussereignis des Fahrmanövers ausgeführt werden und/oder das Fahrmanöver mindestens 10 Sekunden (ausgehend vom momentanen Betriebszustand) vorausberechnen. So wird ein Gefahrenbereich auf die betreffende Bodenfläche 108 projiziert und andere Verkehrsteilnehmer sind frühzeitig gewarnt.

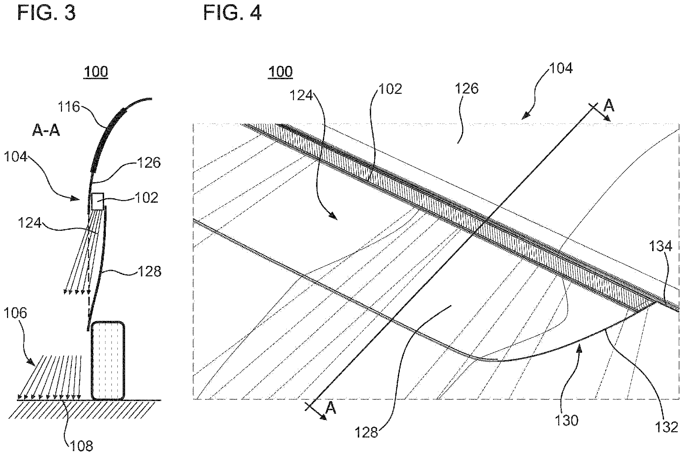

Figur 3 zeigt einen schematischen vertikalen Schnitt senkrecht zur Längsrichtung des Nutzfahrzeugs 100 an einer mit der Lichtquelle 102 ausgestatteten Fahrzeugseite 104. In einer ersten Implementierung ist die Lichtquelle 102 unter einer sich an der Fahrzeugseite 104 horizontal erstreckenden Leiste angeordnet. Die Leiste kann gegenüber der darüber und darunter angrenzenden Außenhaut hervorstehen. Alternativ oder ergänzend ist, wie in der in Figur 3 gezeigten Implementierung, die Lichtquelle 102 in einer in Projektionsrichtung nach unten zur Bodenfläche 108 offenen oder zumindest lichtdurchlässigen Ausnehmung 124 an der Fahrzeugseite 104 angeordnet. Beispielsweise ist oberhalb der Ausnehmung 124 eine Außenverkleidung 126 angeordnet, welche die Lichtquelle 102 nach oben verdeckt. Die Außenverkleidung 126 ist oberhalb der Lichtquelle 102 und auf Höhe der Lichtquelle 102 konvex. Unterhalb der Lichtquelle 102 umfasst die Ausnehmung 124 eine konkave Außenhaut 128 des Nutzfahrzeugs 100.

Figur 4 zeigt schematisch eine perspektivische Unteransicht der Implementierung der Lichtquelle 102 in der Ausnehmung 124. Die Lichtquelle 102 ist zwischen einer in der Ausnehmung 124 innenliegenden Oberkante der Außenhaut 128 und einer außenliegenden Unterkante 134 der Außenverkleidung 126 angeordnet. An einem in Fahrtrichtung vorderen Ende und einem (im Bildausschnitt der Figur 4 schematisch gezeigten) hinteren Ende 130 der Lichtquelle 102 geht eine Unterkante 132 der Außenhaut 128 mit einer stetigen Krümmung zur Unterkante 134 der Außenverkleidung 126 über. So ist vor bzw. hinter der Lichtquelle 102 eine geschlossene Außenhaut an der Fahrzeugseite 104 des Nutzfahrzeugs 100 realisierbar.

In jedem Ausführungsbeispiel des Nutzfahrzeugs 100 kann eine oder mehrere Lichtquellen 102 gemäß der ersten Implementierung und/oder der zweiten Implementierung eingesetzt werden.

In jedem Ausführungsbeispiel des Nutzfahrzeugs 100 kann die Lichtquelle 102 Signallichter, beispielsweise zur Erzeugung von Laserlichtstreifen, umfassen. Diese Lichtstreifen sind auf die Bodenfläche 108 gerichtet und dort als projizierte Streifen 110 des Musters 106 von der Seite sichtbar. Die Bodenfläche 108, d.h., der vom projizierten Muster 106 beleuchtete Bereich des Bodens, ist eine Fläche, welche das Nutzfahrzeug 100 für sein Fahrmanöver in Anspruch nimmt, beziehungsweise der Bereich, welcher von anderen Verkehrsteilnehmern freigehalten werden sollte, um Verkehrsunfälle zu verhindern. Insbesondere beim Fahrbahnwechsel und Abbiegen wird somit allen übrigen Verkehrsteilnehmern frühzeitig mitgeteilt, wohin sich das Nutzfahrzeug bewegen wird und wie viel Platz das Nutzfahrzeug 100 benötigen wird.

Das auf die Bodenfläche 108 projizierte Muster 106 ist variabel von der Steuerungseinheit 114 gesteuert abhängig vom Betriebszustand, beispielsweise einer Einsatzsituation, des Nutzfahrzeugs.

Obwohl die Erfindung in Bezug auf exemplarische Ausführungsbeispiele beschrieben worden ist, ist es für einen Fachmann ersichtlich, dass verschiedene Änderungen vorgenommen werden können .

Folglich ist die Erfindung nicht auf die offenbarten Ausführungsbeispiele beschränkt, sondern umfasst alle Ausführungsbeispiele, die in den Bereich der beigefügten Patentansprüche fallen.

### Bezugszeichenliste

- 100: Nutzfahrzeug
- 102: Lichtquelle
- 104: Fahrzeugseite
- 106: Projiziertes Muster
- 108: Bodenfläche der Projektion
- 110: Streifen des projizierten Musters
- 112: Fahrstreifen des Nutzfahrzeugs
- 114: Steuerungseinheit
- 116: Fensterfront an der Fahrzeugseite
- 118: Fahrzeugtür an der Fahrzeugseite, insbesondere Fahrgasttür
- 120: Fahrgastraum
- 122: Angelenkte Antriebseinheit
- 124: Ausnehmung an der Fahrzeugseite
- 126: Außenverkleidung der Ausnehmung
- 128: Konkave Außenhaut der Ausnehmung
- 130: Längsende der Lichtquelle
- 132: Unterkante der Außenhaut
- 134: Unterkante der Außenverkleidung

## Patentansprüche

1. Nutzfahrzeug (100), umfassend:
eine an mindestens einer Fahrzeugseite (104) des Nutzfahrzeugs (100) angeordnete Lichtquelle (102), die dazu ausgebildet ist, ein steuerbares Muster (106) auf eine an die jeweilige Fahrzeugseite (104) angrenzende Bodenfläche (108) neben dem Nutzfahrzeug (100) zu projizieren; und
eine mit der Lichtquelle (102) in Signalverbindung stehende Steuerungseinheit (114), die dazu ausgebildet ist, einen Betriebszustand des Nutzfahrzeugs (100) zu erfassen und die Lichtquelle (102) zur Signalisierung des erfassten Betriebszustands mittels des projizierten Musters (106) zu steuern,
**dadurch gekennzeichnet, dass**
die Steuerungseinheit (114) ferner dazu ausgebildet ist, einen Verkehrsteilnehmer auf der Bodenfläche (108) der Projektion zu erfassen und beim Erfassung eines Verkehrsteilnehmers auf der Bodenfläche (108) der Projektion eine Veränderung der Farbe des projizierten Musters (106) zu steuern.

2. Nutzfahrzeug nach Anspruch 1, wobei die Lichtquelle (102) über die Fahrzeugseite (104) des Nutzfahrzeugs (100) verteilt angeordnet ist.

3. Nutzfahrzeug nach Anspruch 2, wobei die Lichtquelle (102) nach oben von einer Außenverkleidung (126) verdeckt in einer zur Projektion nach unten und zur Seite offenen Ausnehmung (124) an der Fahrzeugseite (104) angeordnet ist.

4. Nutzfahrzeug nach einem der Ansprüche 1 bis 3, wobei sich das projizierte Muster (106) über die Fahrzeuglänge des Nutzfahrzeugs (100) hinaus erstreckt.

5. Nutzfahrzeug nach einem der Ansprüche 1 bis 4, wobei das projizierte Muster (106) hinsichtlich Form und Farbe steuerbar ist.

6. Nutzfahrzeug nach einem der Ansprüche 1 bis 5, wobei die Steuerungseinheit (114) dazu ausgebildet ist, ein Fahrmanöver zu erfassen, eine beim erfassten Fahrmanöver zukünftig befahrene Bodenfläche (108) vorauszuberechnen, und das Muster (106) zumindest teilweise auf die vorausberechnete Bodenfläche (108) zu projizieren.

7. Nutzfahrzeug nach Anspruch 6, wobei in der Vorausberechnung die Bodenfläche (108) als befahren gilt, falls diese aufgrund des Fahrmanövers mit mindestens einem Rad befahren oder vom Nutzfahrzeug (100) überstrichen wird.

8. Nutzfahrzeug nach einem der Ansprüche 1 bis 7, wobei das projizierte Muster (106) eine Sperrfläche mit geraden und zueinander parallelen Streifen (110) umfasst.

9. Nutzfahrzeug nach einem der Ansprüche 1 bis 8, wobei die Steuerungseinheit (114) ferner dazu ausgebildet ist, eine Fahrbewegung des Nutzfahrzeugs (100) zu erfassen und das projizierte Muster (106) entsprechend der erfassten Fahrbewegung zu verändern, so dass das gesamte projizierte Muster (106) bezüglich der Bodenfläche (108) ruht.

10. Nutzfahrzeug nach einem der Ansprüche 1 bis 9, wobei die Lichtquelle (102) in räumlicher Zuordnung zu mindestens einer Fahrgasttür (118) angeordnet ist, und die Steuerungseinheit (114) dazu ausgebildet ist, während einer ersten Zeitphase zum Einsteigen das Muster (106) mit einer ersten Farbe auszugeben und während einer zweiten Zeitphase zum Aussteigen mit einer von der ersten Farbe verschiedenen zweiten Farbe auszugeben.

11. Nutzfahrzeug nach einem Anspruch 10, wobei das projizierte Muster (106) eine zum Einsteigen und Aussteigen zu betretende Zugangsfläche vor der Fahrgasttüre (118) angibt.

12. Nutzfahrzeug nach Anspruch 11, wobei die Zugangsfläche einen Fahrstreifen quert, und die Steuerungseinheit (114) ferner dazu ausgebildet ist, Verkehrsteilnehmer auf dem Fahrstreifen zu erfassen und bei Annäherung eines erfassten Verkehrsteilnehmers ein vor dem sich annähernden Verkehrsteilnehmer warnendes Muster (106) zu projizieren.

13. Nutzfahrzeug nach einem der Ansprüche 1 bis 12, wobei die Steuerungseinheit (114) ferner dazu ausgebildet ist, eine Fahrbewegung des Nutzfahrzeugs (100) zu erfassen und das projizierte Muster (106) entsprechend der erfassten Fahrbewegung zu verändern, wobei eine Projektionsrichtung die erfasste Fahrbewegung des Nutzfahrzeugs vollständig oder teilweise kompensiert.

## Claims

1. Commercial vehicle (100), comprising:
a light source (102) arranged on at least one vehicle side (104) of the commercial vehicle (100), which is designed to project a controllable pattern (106) onto a ground surface (108) adjacent to the respective vehicle side (104) next to the commercial vehicle (100); and
a control unit (114) in signal connection with the light source (102), which is designed to detect an operating state of the commercial vehicle (100) and to control the light source (102) for signalling the detected operating state by means of the projected pattern (106),
**characterized in that** the control unit (114) is further configured to detect a road user on the ground surface (108) of the projection and to control a change in the colour of the projected pattern (106) upon detection of a road user on the ground surface (108) of the projection.

2. Commercial vehicle according to claim 1, wherein the light source (102) is arranged distributed over the vehicle side (104) of the commercial vehicle (100).

3. Commercial vehicle according to claim 2, wherein the light source (102) is arranged upwardly concealed by an outer panelling (126) in a recess (124) on the vehicle side (104) which is open for projection downwards and to the side.

4. A commercial vehicle according to any one of claims 1 to 3, wherein the projected pattern (106) extends beyond the vehicle length of the commercial vehicle (100).

5. A commercial vehicle according to any one of claims 1 to 4, wherein the projected pattern (106) is controllable with respect to shape and colour.

6. Commercial vehicle according to one of claims 1 to 5, wherein the control unit (114) is designed to detect a driving manoeuvre, to predict a ground surface (108) driven on in the future during the detected driving manoeuvre, and to project the pattern (106) at least partially onto the predicted ground surface (108).

7. Commercial vehicle according to claim 6, wherein in the advance calculation the ground surface (108) is deemed to have been driven over if at least one wheel drives over it or the commercial vehicle (100) passes over it as a result of the driving manoeuvre.

8. The utility vehicle according to any one of claims 1 to 7, wherein the projected pattern (106) comprises a barrier surface having straight and mutually parallel stripes (110).

9. The utility vehicle according to any one of claims 1 to 8, wherein the control unit (114) is further designed to detect a driving movement of the commercial vehicle (100) and to change the projected pattern (106) in accordance with the detected driving movement, so that the whole projected pattern (106) rests with respect to the ground surface.

10. Commercial vehicle according to one of claims 1 to 9, wherein the light source (102) is arranged in spatial association with at least one passenger door (118), and the control unit (114) is designed to output the pattern (106) with a first colour during a first time phase for boarding and with a second colour different from the first colour during a second time phase for alighting.

11. A commercial vehicle according to claim 10, wherein the projected pattern (106) indicates an access area in front of the passenger door (118) to be entered for boarding and alighting.

12. Commercial vehicle according to claim 11, wherein the access surface crosses a lane, and the control unit (114) is further designed to detect road users on the lane and, user when a detected road user is approaching, to project a warning pattern (106) in front of the approaching road user.

13. Commercial vehicle according to one of the claims 12, wherein the control unit (114) is further configured to detect a driving movement of the commercial vehicle (100) and to modify the projected pattern (106) according to the detected driving movement, wherein a projection direction fully or partially compensates for the detected driving movement of the commercial vehicle.

## Revendications

1. Véhicule utilitaire (100), comprenant :
une source de lumière (102) disposée sur au moins un côté de véhicule (104) du véhicule utilitaire (100), qui est réalisée pour projeter un motif (106) pouvant être commandé sur une surface au sol (108), adjacente au côté de véhicule (104) respectif, à côté du véhicule utilitaire (100) ; et
une unité de commande (114) en liaison de signalisation avec la source de lumière (102), qui est réalisée pour détecter un état de fonctionnement du véhicule utilitaire (100) et pour commander la source de lumière (102) pour signaler au moyen du motif projeté (106) l'état de fonctionnement détecté,
**caractérisé en ce que** dans lequel l'unité de commande (114) est en outre réalisée pour détecter un usager de la route sur la surface au sol (108) de la projection, et pour commander une modification de la couleur du motif projeté (106) en cas de détection d'un usager de la route sur la surface au sol (108) de la projection.

2. Véhicule utilitaire selon la revendication 1, dans lequel la source de lumière (102) est répartie sur le côté de véhicule (104) du véhicule utilitaire (100).

3. Véhicule utilitaire selon la revendication 2, dans lequel la source de lumière (102) est disposée Vers le haut, recouverte par un revêtement extérieur (126), dans une cavité (124) ouverte vers le bas et sur le côté pour la projection, sur le côté du véhicule (104).

4. Véhicule utilitaire selon l'une quelconque des revendications 1 à 3, dans lequel le motif projeté (106) s'étend au-delà de la longueur de véhicule du véhicule utilitaire (100).

5. Véhicule utilitaire selon l'une quelconque des revendications 1 à 4, dans lequel le motif projeté (106) peut être commandé en termes de forme et de couleur.

6. Véhicule utilitaire selon l'une quelconque des revendications 1 à %, dans lequel l'unité de commande (114) est réalisée pour détecter une manœuvre, pour calculer à l'avance une surface au sol (108) qui sera parcourue ultérieurement lorsque la manœuvre sera détectée, et pour projeter le motif (106) au moins partiellement sur la surface au sol (108) calculée à l'avance.

7. Véhicule utilitaire selon la revendication 6, dans lequel la surface au sol (108) est pour le calcul à l'avance considérée comme parcourue si elle est parcourue par au moins une roue ou est frôlée par le véhicule utilitaire (100) en raison de la manœuvre.

8. Véhicule utilitaire selon l'une quelconque des revendications 1 à 7, dans lequel le motif projeté (106) comprend une surface interdite munie de bandes (110) droites et parallèles les unes aux autres.

9. Véhicule utilitaire selon l'une des revendications 1 à 8, où l'unité de commande (114) est en outre conçue pour détecter un mouvement de conduite du véhicule utilitaire (100) et modifier le motif projeté (106) en fonction du mouvement de conduite détecté, de sorte que l'ensemble du motif projeté (106) reste fixe par rapport à la surface du sol (108).

10. Véhicule utilitaire selon l'une quelconque des revendications 1 à 9, dans lequel la source de lumière (102) est disposée en association spatiale avec au moins une porte côté passager (118), et l'unité de commande (114) est réalisée pour émettre le motif (106) avec une première couleur pendant une première phase de temps de montée, et pour l'émettre avec une deuxième couleur différente de la première couleur pendant une deuxième phase de temps de descente.

11. Véhicule utilitaire selon la revendication 10, dans lequel le motif projeté (106) indique une surface d'accès devant la porte côté passager (118) pour la montée et la descente.

12. Véhicule utilitaire selon la revendication 11, dans lequel la surface d'accès traverse une voie de circulation, et l'unité de commande (114) est en outre réalisée pour détecter des usagers de la route sur la voie de circulation, et pour projeter un motif (106) avertissant de l'approche de l'usager de la route en cas d'approche d'un usager de la route détecté.

13. Véhicule utilitaire selon l'une des revendications 1 à 12, où l'unité de commande (114) est en outre conçue pour détecter un mouvement de conduite du véhicule utilitaire (100) et modifier le motif projeté (106) en fonction du mouvement de conduite détecté, une direction de projection compensant totalement ou partiellement le mouvement de conduite détecté du véhicule utilitaire.
